# EUROPÄISCHE PATENTSCHRIFT

(11) **EP 3 406 136 B1**
(45) Veröffentlichungstag und Bekanntmachung des Hinweises auf die Patenterteilung: **15.07.2020**
(21) Anmeldenummer: 18173802.2
(22) Anmeldetag: 23.05.2018
(51) Int. Cl.: A01K 27/00

(54) **ROLLLEINE ZUM AUFROLLEN UND ABROLLEN EINER LEINE**
ROLLING LEAD FOR COILING AND EXTENDING A LEAD
LAISSE ENROULABLE POUR ENROULER ET DÉROULER UNE LAISSE

(30) Priorität: 24.05.2017 DE 102017111488
(43) Veröffentlichungstag der Anmeldung: 28.11.2018
(73) Patentinhaber: Flexi-Bogdahn Technik GmbH & Co. KG, 22941 Bargteheide (DE)
(72) Erfinder: Bogdahn, Manfred, 22391 Hamburg (DE); Lau, Thomas, 23730 Neustadt in Holstein (DE)
(74) Vertreter: Zacco Patent- und Rechtsanwalts GmbH

(56) Entgegenhaltungen:
- EP-A1- 2 950 639
- DE-U1- 20 108 777
- FR-A- 1 533 325
- US-B2- 8 904 969

## Beschreibung

Die Erfindung betrifft eine Rollleine zum Aufrollen und Abrollen einer Leine, insbesondere zum Führen eines Tieres, mit eine Leinenrolle, die drehbar an einem Träger gelagert und mittels Rückstellmitteln in eine Aufrollposition rückstellbar ist, in der die Leine auf die Leinenrolle aufgewickelt ist, und mit Blockiermitteln zum Blockieren eines Abrollens der Leine von der Leinenrolle, welche eine mit der Leinenrolle reibschlüssige Bremse haben, die als Bandbremse mit einem Bremsband ausgebildet ist.

Mit einer derartigen Rollleine lässt sich ein Tier, beispielsweise ein Hund, sicher und zuverlässig von einer Führungsperson führen, da permanent eine Leinenverbindung zu dem Tier aufrechterhalten werden kann. Gleichzeitig lässt sich die Bewegungsfreiheit des Tieres den jeweiligen Gegebenheiten anpassen. Insbesondere kann das Abrollen der Leine von der Leinenrolle blockiert werden, um so ein weiteres Entfernen des Tieres von der Führungsperson zu verhindern.

Eine solche Rollleine ist aus der DE 201 08 777 U1 und der FR 1 533 325 A bekannt.

Aus dem Dokument US 8 904 969 B2 ist eine Rollleine mit einer reibschlüssigen Bremse bekannt. Die Rollleine hat einen Bremsmechanismus, der einen sanften Bremsauslöser beinhaltet, der schwenkbar an einem Gehäuse befestigt ist. Der sanfte Bremsauslöser hat ein Bremselement, das mit einem Schlitz versehen ist, um einen sich nach außen erstreckenden Stift eines Abzugs aufzunehmen. Der Bremsauslösers wirkt mit dem Bremselement zusammen, wobei das Bremselement mittels des Bremsauslösers auf die Leinenrolle aufgedrückt wird.

Eine weitere Rollleine mit einer reibschlüssigen Bremse ist aus dem Dokument EP 2 950 639 A1 bekannt. Die Rollleine hat Mittel zum geregelten, schrittweisen Abbremsen der Leine auf einer Leinenrolle. Die Vorrichtung verwendet ein Nockensystem, das zwischen dem Bedientaster und der Leinenrolle montiert ist. Durch Drücken des Bedientasters wird eine Nocke gedreht, die in eine entsprechende Vertiefung des Bedientasters eingreift. Die Nocke hat ein Bremselement, welches aufgrund der Drehung der Nocke allmählich gegen die Leinenrolle drückt und eine allmähliche Bremswirkung bis zu dem Punkt ausübt, an dem die Leinenrolle vollständig blockiert ist.

Eine weitere Rollleine ist beispielsweise aus der DE 10 2014 114 885 A1 bekannt.

Nachteilig bei den bekannten Rollleinen ist, dass mit den verwendeten Blockiermitteln, üblicherweise sind dies Rasten, das Abrollen der Leine von der Leinenrolle nur blockiert oder freigegeben werden kann. Wenn das Tier bereits in einer schnelleren Bewegung von der Führungsperson weg ist oder insbesondere durchzugehen droht, führt dieses plötzliche Blockieren der Leinenrolle zu einem mitunter heftigen Ruck in der Leine. Dies ist für Tier wie für Führungsperson gleichermaßen unangenehm und kann bei Unachtsamkeit oder einer schwachen oder gebrechlichen Führungsperson auch zu einem Sturz oder einer Verletzung führen.

Aufgabe der Erfindung ist es deshalb, eine Rollleine anzugeben, mit der sich der Aktionsradius eines geführten Tieres möglichst sanft, vorzugsweise ruckfrei, auch bei einem durchgehenden Tier begrenzen lässt.

Die Aufgabe wird dadurch gelöst, dass bei einer Rollleine der eingangs genannten Art die Blockiermittel zweistufig sind und vorzugsweise als zweite Stufe Rastmittel zum formschlüssigen Blockieren des Abrollens haben, die mit Vorsprüngen im Bereich des Außenumfangs der Leinenrolle zusammenwirken, und dass eine Bremstaste zum Betätigen der Bremse und der zweiten Stufe vorgesehen ist.

Mittels dieser reibschlüssigen Bremse kann einerseits eine in Ruhe befindliche Leinenrolle zuverlässig blockiert werden. Wenn sich ein geführtes Tier zügig von der Führungsperson entfernt oder sogar durchgeht, lässt sich mit der reibschlüssigen Bremse die Bewegung des Tieres sanft und insbesondere ruckfrei bis zum Stillstand abbremsen.

Eine Weiterbildung der Erfindung zeichnet sich dadurch aus, dass die Bremse eine Bandbremse mit einem Bremsband ist. Das Bremsband kann vorzugsweise als langgestreckter Metallstreifen ausgebildet sein. Ein solches Bremsband ermöglicht einen einfachen Aufbau in Form einer Umschlingung der Leinenrolle oder eines Abschnitts davon. Es lässt sich eine gute Krafteinleitung bei gleichfalls guter Wärmeableitung gewährleisten. Insbesondere umgibt das Bremsband die Leinenrolle in einem Umfangsabschnitt. Dadurch ergibt sich eine zuverlässige Bremswirkung ohne unerwünschte Wechselwirkung mit der Leine. Es ist außerdem von Vorteil, wenn der Umfangsabschnitt einen Reibbelag aufweist. Dadurch lässt sich die Reibwirkung und somit die Bremswirkung bei verhältnismäßig geringem Kraftaufwand der Führungsperson erhöhen, was insbesondere für große und kräftige Tiere von Vorteil ist. Als Material für den Reibbelag bietet sich Polyurethan an. Polyurethan erzeugt eine hinreichende Reibung und ist ausreichend verschleißfest. Der Reibbelag kann mittels eines Zwei-Komponenten-Spritzgussverfahrens hergestellt werden. Dies macht die Produktion besonders einfach.

Bei einer Weiterbildung hat das Bremsband einen ersten Endabschnitt und einen von dem ersten Endabschnitt abgewandten zweiten Endabschnitt. Mittels dieser Endabschnitte ist eine Befestigung bzw. eine Betätigung des Bremsbandes möglich. Insbesondere ist mindestens der erste Endabschnitt oder der zweite Endabschnitt als Betätigungsabschnitt zum Ineingriffbringen des Bremsbandes mit dem Reibbelag an einem Zuglager angeordnet. Durch Ziehen an dem Zugabschnitt lässt sich eine feste Umschlingung des Umfangsabschnittes mit dem Bremsband erzielen, da insbesondere das Bremsband gut Zugkräfte übertragen kann. Es ist außerdem von Vorteil, wenn der erste Endabschnitt oder der zweite Endabschnitt in seiner Längsbewegung durch einen Anschlag begrenzt an dem Träger angeordnet ist. Insbesondere kann der erste Endabschnitt oder der zweite Endabschnitt ortsfest an dem Träger angeordnet sein. Auf diese Weise ergibt sich ein guter Fixpunkt gegen einen Zug an dem anderen Endabschnitt, was eine gute und zuverlässige Krafteinleitung bei einem einfachen Aufbau ermöglicht.

Die Bremstaste ist zum Betätigen der Bremse vorgesehen. Die Bremstaste ermöglicht eine einfache Bedienung. Eine Weiterbildung zeichnet sich dadurch aus, dass die Bremstaste mittels eines Hebelgetriebes mit dem Bremsband in Wirkverbindung steht. Auf diese Weise kann bei geringer Betätigungskraft der Bremstaste eine erwünscht hohe Bremswirkung erzielt werden. Es ist dabei von Vorteil, wenn das Hebelgetriebe einen um eine Achse schwenkbaren Bremshebel aufweist. Dies ergibt einen besonders einfachen und robusten Aufbau.

Es ist außerdem von Vorteil, wenn der Bremshebel einen Doppelhebel hat. Auf diese Weise lässt sich konstruktiv einfach das gewünschte Übersetzungsverhältnis durch die jeweilige Hebellänge einstellen. Der Doppelhebel kann zwei Teilbremshebel haben. Auf diese Weise kann dem jeweiligen Endabschnitt die gewünschte Übersetzung zugeordnet werden. Die Teilbremshebel können an voneinander abgewandten Seiten der Achse angeordnet sein. In diesem Fall lässt sich den beiden Endabschnitten gleichzeitig eine Zugkraft zuführen. Es ist aber auch möglich, dass ein Hebel mit zwei Zuglagern ausgebildet ist. In diesem Fall kann ein feiner dosiertes Zuziehen des Bremsbandes gewährleistet werden. Insbesondere ist es von Vorteil, wenn die Teilbremshebel die gleiche Hebellänge haben. Dies gibt eine besonders ausgeglichene Krafteinleitung.

Bei einer anderen Weiterbildung hat ein auf Zug durch das Bremsband belastetes Zuglager eine kleinere Hebellänge als ein beim Bremsen auf Druck durch das Bremslager belastetes Zuglager. Dies bewirkt eine Selbsthemmung bzw. eine Verstärkung der Bremskraft bei einmal eingeleitetem Bremsvorgang.

Die Blockiermittel sind zweistufig. Auf diese Weise lässt sich ein sanftes Anbremsen mit einem kraftvollen Arretieren kombinieren. Die zweite Stufe hat Rastmittel zum formschlüssigen Blockieren des Abrollens. Dieses formschlüssige Blockieren bewirkt eine besonders hohe Haltekraft bei geringem Aufwand an Betätigungskraft auf die Blockiermittel. Insbesondere können die Rastmittel mit Vorsprüngen im Bereich des Außenumfangs der Leinenrolle zusammenwirken. So ergibt sich eine große Haltekraft bei verhältnismäßig geringer Belastung der Leinenrolle.

Eine vorteilhafte Ausgestaltung ist gekennzeichnet durch eine Kupplung zum Auslösen der zweiten Stufe. Auf diese Weise lässt sich einfach das Auslösen der ersten und der zweiten Stufe steuern. Gleichzeitig wird ein unerwünschtes Rattern durch die zweistufige Ausgestaltung vermieden, da die erste Stufe reibschlüssig arbeitet und die zweite Stufe nach Auslösen der Kupplung schlagartig einrückt. Hierzu kann eine Rutschkupplung, eine Magnetkupplung oder eine Kugelkopfkupplung als einfache Ausgestaltung verwendet werden. Bei der Magnetkupplung kann auch nach Auslösen noch eine gewisse Magnetkraft vorhanden sein. Dadurch verbleibt ein Reibschluss zwischen Bremsband und Leinenrolle. So kann auch bei dem formschlüssigen Blockieren eine unerwünschte Geräuschentwicklung bei wechselnder Belastung der Leine vermieden werden. Besonders einfach wird der Aufbau, wenn die Magnetkupplung miteinander magnetisch gekuppelte Hebel hat. Hierbei kann mindestens ein Hebel Teil des Hebelgetriebes sein. Wenn die Kugelkopfkupplung eine Einsenkung und eine damit in Verbindung stehende Kugel hat, ergibt sich ein einfacher Aufbau. Vorzugsweise ist die Kugel mittels einer Feder gegen die Einsenkung vorgespannt und gegen die Federkraft zum Lösen der Kupplung bewegbar. Eine solche Ausgestaltung ist zuverlässig, robust und langlebig.

Eine vorteilhafte Weiterbildung ist gekennzeichnet durch eine Arretiertaste zum Arretieren der Bremstaste in einer Bremsstellung. Auf diese Weise kann die Begrenzung des Aktionsradius des geführten Tieres auf längere Zeit ohne Ermüdung der Führungsperson aufrechterhalten werden. Wenn zum Betätigen der Arretiertaste ein Schaltwiderstand überwunden werden muss, erschwert dies eine versehentliche Fehlbedienung. Dieser Schaltwiderstand kann durch einen mit der Arretiertaste wirkverbundenen, einen Vorsprung aufweisenden Hebel bewirkt werden. Dies ergibt einen einfachen und zuverlässigen Aufbau. Der Vorsprung kann kugelkopfförmig sein. Dadurch lässt sich ein unerwünscht großer Schaltwiderstand vermeiden. Der Vorsprung kann mit einem Trägervorsprung oder einer Trägereinsenkung zusammenwirken. Der Trägervorsprung kann eine Trägerrippe sein. Auf diese Weise kann der Trägervorsprung oder die Trägereinsenkung bereits beim Herstellen des Trägers, beispielsweise im Spritzgussverfahren, auf einfache Weise erzeugt werden.

Nachfolgend werden Ausführungsbeispiele der Erfindung anhand der Zeichnungen näher erläutert. Es zeigen:
- Fig. 1: eine schematische Seitendarstellung einer ersten Rollleine mit den Erfindungsmerkmalen mit abgenommenem linken Gehäuseteil,
- Fig. 2: eine Schnittdarstellung der Rollleine von Fig. 1 mit entfernter Leinenrolle,
- Fig. 3: eine vergrößerte Teildarstellung einer Kupplung der Rollleine von Fig. 1,
- Fig. 4: eine Schnittdarstellung des Bereichs von Fig. 3 mit ausgelöster Kupplung,
- Fig. 5: eine schematische Seitendarstellung einer weiteren Rollleine mit abgenommenem rechten Gehäuseteil als weiteres Ausführungsbeispiel der Erfindung,
- Fig. 6: eine schematische Darstellung der wesentlichen Elemente der Blockiermittel einer anderen Ausführungsform mit einer anderen Ausgestaltung einer Kupplung, und
- Fig. 7: eine schematische Darstellung eines anderen Wirkprinzips einer Bremse für eine Rollleine mit den Erfindungsmerkmalen.

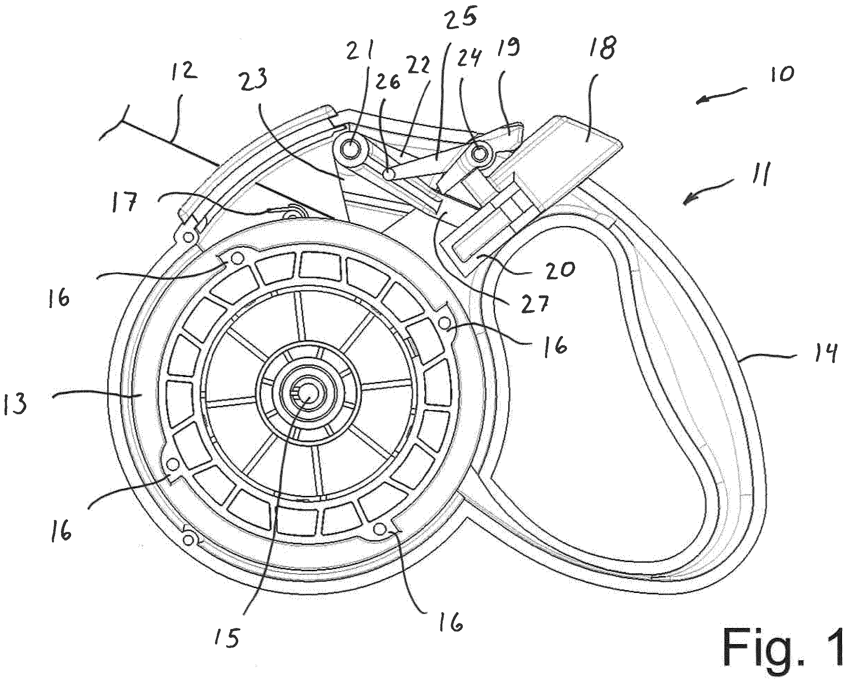

Fig. 1 zeigt eine schematische Seitendarstellung einer ersten Rollleine 10 mit den Erfindungsmerkmalen mit abgenommenem linken Gehäuseteil. Wie sich der Figur entnehmen lässt, hat die Rollleine 10 ein Gehäuse 11, aus dem sich in der Figur links oben eine Leine 12 erstreckt. Die Leine 12 ist auf eine in dem Gehäuse 11 angeordnete Leinenrolle 13 auf bekannte Weise aufgerollt. An seinem von der Leine 12 abgewandten Ende hat das Gehäuse 11 einen Griff 14.

Die Leinenrolle 13 ist um eine Achse 15 rotierbar gelagert und weist ihrem Außenumfang benachbart Vorsprünge 16 auf. Die Vorsprünge 16 sind rampenartig ausgebildet. Einen Außenumfangsabschnitt der Leinenrolle 13 umgebend ist ein Bremsband 17 angeordnet, auf das nachfolgend noch näher eingegangen wird. Das Bremsband 17 ist bei dem gezeigten Ausführungsbeispiel ein Metallstreifen.

Aus dem Gehäuse 11 dem Griff 14 benachbart erstreckt sich eine Bremstaste 18 und eine Arretiertaste 19 nach außen. Der Bremstaste 18 zugeordnet ist ein Rastabschnitt 20 an einem der Leinenrolle 13 zugewandten Ende der Bremstaste 18 angeordnet. Die Bremstaste 18 ist in ihrer Längsrichtung verschiebbar und federnd in die gezeigte Ruheposition rückgestellt in dem Gehäuse 11 angeordnet.

Um eine Achse 21 schwenkbar sind in dem Gehäuse 11 ein Betätigungshebel 22 und ein Bremshebel 23 angeordnet und bilden so ein Hebelgetriebe.

Der Arretiertaste 19 ist schwenkbar um eine Achse 24 in dem Gehäuse 11 gelagert. Der Arretiertaste 19 hat in ihrer über die Achse 24 hinausgehenden Verlängerung einen Arm 25, an dessen von der Achse 24 abgewandten Ende ein Vorsprung 26 angeordnet ist. Der Vorsprung 26 ist bei dem gezeigten Ausführungsbeispiel kugelkopfförmig ausgebildet und wirkt mit einer nicht in der Figur dargestellten Gehäuserippe an der Innenseite des weggelassenen linken Gehäuseteiles zusammen. Auf diese Weise ergibt sich ein präziser Druckpunkt beim Betätigen des Arretierhebels 19.

Wie sich der Figur weiter entnehmen lässt, ist außerdem ein Arm 27 schwenkbar an der Achse 21 gelagert. Auf die Funktion des Armes 27 wird nachfolgend noch näher eingegangen.

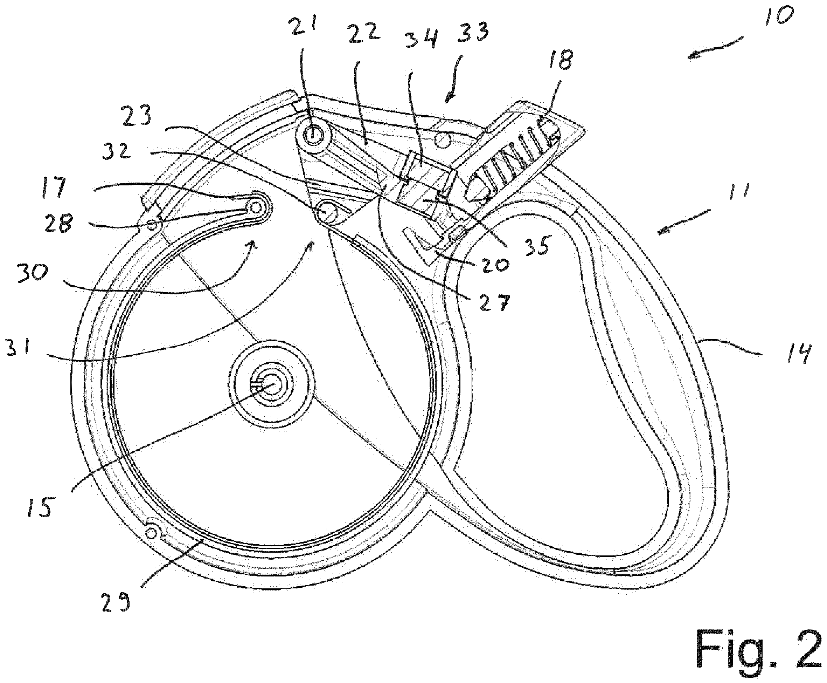

Fig. 2 zeigt eine Schnittdarstellung der Rollleine von Fig. 1 mit entfernter Leinenrolle. Wie sich der Figur entnehmen lässt, ist ein erster Endabschnitt 30 des Bremsbandes 17 an einem Festlager 28 des Gehäuses 11 festgesetzt. Von dem Festlager 28 ausgehend erstreckt sich eine etwa kreisförmige Rippe 29 in etwa konzentrisch um die Achse 15. Das Bremsband 17 liegt in dem gezeigten Zustand am Innenumfang der Rippe 29 an.

An dem von dem ersten Endabschnitt abgewandten Ende des Bremsbandes 17 ist ein zweiter Endabschnitt 31 vorgesehen, der an einem Zuglager 32 an dem Bremshebel 23 gelagert ist.

Eine Magnetkupplung 33 wird gebildet durch einen Magneten 34 und ein Eisenstück 35. Der Magnet 34 ist an dem Betätigungshebel 22 angeordnet. Im Gegenzug ist das Eisenstück 35 an dem Arm 27 angeordnet.

Bei einer Betätigung der Bremstaste 18 wird der Arm 27 um die Achse 21 im Uhrzeigersinn geschwenkt. Durch die Magnetwirkung der Magnetkupplung 33 wird der Magnet 34 zusammen mit dem Eisenstück 35 - in der Figur im Uhrzeigersinn - um die Achse 21 geschwenkt. Auf diese Weise wird auch der Betätigungshebel 22 und mit diesem der Bremshebel 23, die bei dem gezeigten Ausführungsbeispiel als Doppelhebel ausgebildet sind, um die Achse 21 im Uhrzeigersinn geschwenkt. Das Zuglager 32 bewegt sich auf diese Weise in der Figur nach links und zieht den zweiten Endabschnitt 31 des Bremsbandes 17 in der Figur ebenfalls nach links. Auf diese Weise wird der Umfang des Bremsbandes 17 verkürzt und eine Bremswirkung auf den Umfangsabschnitt der Leinenrolle 13 ausgewirkt, mit dem das Bremsband dadurch in Wirkverbindung kommt. Abhängig von der mit dem Daumen auf die Bremstaste 18 ausgeübten Betätigungskraft ergibt sich so eine Bremskraft auf die Leinenrolle 13. Außerdem ergibt sich ein gewisses Maß an Selbsthemmung durch den Reibschluss von Leinenrolle 13 und Bremsband 17, der ein Zuziehen des Bremsbandes 17 auf der Leinenrolle 13 bewirkt. Bei Überschreiten einer vorbestimmten Betätigungskraft löst die Magnetkupplung 33 aus, wie nachfolgend näher erläutert wird.

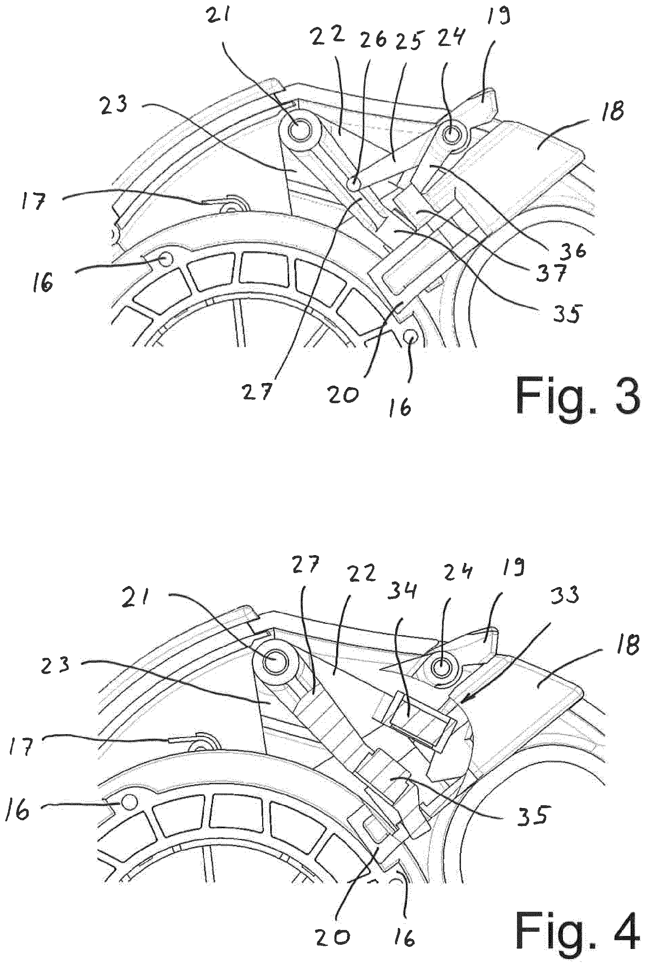

Fig. 3 zeigt eine vergrößerte Teildarstellung der Kupplung 33 der Rollleine 10 von Fig. 1. Wie sich der Figur entnehmen lässt, weist die Arretiertaste 19 außerdem einen Arretierabschnitt 36 auf, der hebelartig ausgebildet und ebenfalls um die Achse 24 schwenkbar mit der Arretiertaste 19 ist. Dem Arretierabschnitt 36 zugewandt hat die Bremstaste 18 einen Vorsprung 37. In dem gezeigten Zustand ist die Bremstaste 18 in ihrer Längsrichtung bis auf die Leinenrolle 13 niedergedrückt und die Arretiertaste 19 zum Arretieren der Bremstaste - in der Figur gegen den Uhrzeigersinn - um die Achse 24 geschwenkt. Auf diese Weise ist der Arretierabschnitt 36 zur Anlage mit dem Vorsprung 37 gebracht, so dass ein Zurückfedern der Bremstaste 18 durch ein Anstoßen des Vorsprunges 37 an den Arretierabschnitt 36 verhindert ist.

Fig. 4 zeigt eine Schnittdarstellung des Bereichs von Fig. 3 mit ausgelöster Kupplung 33. Gezeigt ist eine teilgeschnittene Darstellung, anhand derer die Wirkungsweise der Kupplung 33 erläutert werden soll. Wie bereits erläutert, ist in dem dargestellten Zustand die Bremstaste 18 bis auf die Leinenrolle 13 durchgedrückt. Dabei ist die durch den Magneten 34 und das Eisenstück 35 vorbestimmte maximale Haltekraft der Kupplung 33 überschritten worden. Die Kupplung 33 hat dadurch ausgelöst und das mit der Bremstaste 18 heruntergedrückte Eisenstück 35 ist von dem Magneten 34 gelöst worden. In diesem Fall schnellt der Magnet 34 an dem Hebel 22 um die Achse 21 durch die rückstellende Federkraft des als Metallband ausgebildeten Bremsbandes 17 teilweise zurück, wird aber durch die Magnetkraft zwischen dem Magneten 34 und dem Eisenstück 35 noch soweit angezogen, dass der Reibschluss zwischen dem Bremsband 17 und der Leinenrolle 13 erhalten bleibt. Der Bremswiderstand auf die Bremstaste 18 lässt schlagartig nach und die Bremstaste 18 wird ungehindert durchgedrückt, bis der Rastabschnitt 20 auf der Leinenrolle 13 aufliegt. In diesem Zustand schlägt bei weiterem Abrollen der Leinenrolle 13 der nächste Vorsprung 16 an den Rastabschnitt 20 an und blockiert so ein weiteres Abrollen der Leine 12 von der Leinenrolle 13. Die Leinenrolle ist zuverlässig bei geringer Haltekraft gegen ein weiteres Abrollen der Leine 12 von der Leinenrolle 13 blockiert.

Ein Rattern der Rollleine 10 beim Betätigen der Bremstaste kommt wegen der reibschlüssigen Bremswirkung mit dem Bremsband 17 nicht zustande. Beim Arretieren der Leinenrolle 13 mit dem Rastabschnitt 20 kann es ebenfalls nicht zu einem Rattern kommen, da der Rastabschnitt 20 nach Auslösen der Magnetkupplung 33 ruckartig in seine Rastposition einrückt. Da außerdem die Leinenrolle 13 durch die Magnetkraft zwischen dem Magneten 34 und dem Eisenstück 35 auch in dem arretierten Zustand mit dem Bremsband 17 in Reibschluss bleibt, ist auch bei wechselnden Belastungen an der Leine 12 keine unerwünschte Geräuschentwicklung durch Anstoßen des Rastabschnittes 20 an einander benachbarten Vorsprüngen 16 möglich.

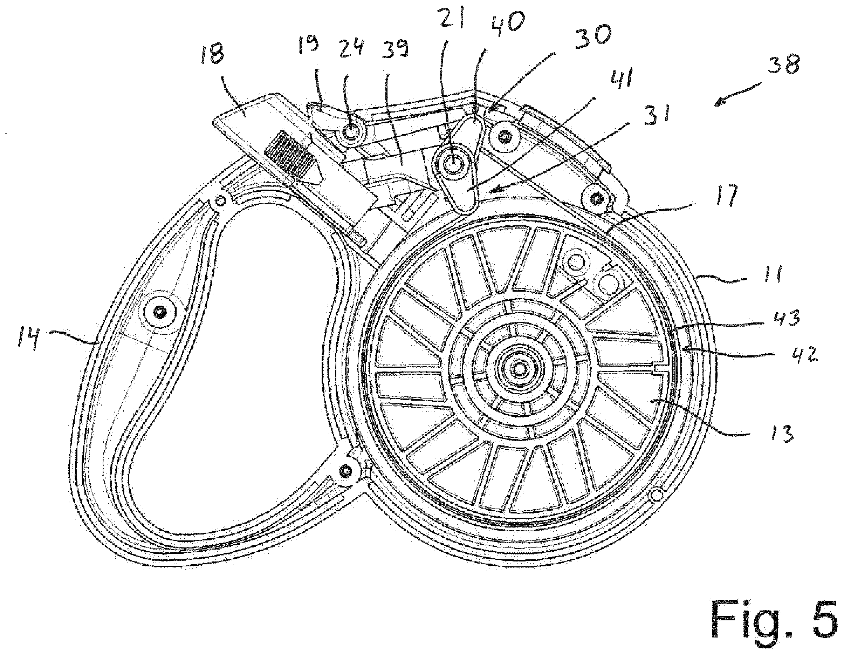

Fig. 5 zeigt eine schematische Seitendarstellung einer weiteren Rollleine 38 mit abgenommenem rechten Gehäuseteil als weiteres Ausführungsbeispiel der Erfindung.

Die Rollleine 38 entspricht von ihrem Aufbau her im Wesentlichen der Rollleine 10. Gleiche Elemente tragen die gleichen Bezugszeichen. Im Gegensatz zu der Rollleine 10 hat die Rollleine 38 an Stelle des Betätigungshebels 22 einen Betätigungshebel 39, der um die Achse 21 schwenkbar angeordnet ist. Der Antrieb des Betätigungshebels 39 mit der Bremstaste 18 erfolgt wie bei der Rollleine 10.

Am von der Bremstaste 18 abgewandten Ende des Betätigungshebels 39 ist dieser mit ebenfalls um die Achse 21 schwenkbaren Bremshebeln 40, 41 drehfest verbunden.

Anders als bei der Rollleine 10 ist der erste Endabschnitt 30 des Bremsbandes 17 nicht an einem Festlager sondern an einem nicht in der Figur dargestellten Zuglager an dem Bremshebel 40 angeordnet. Ähnlich ist der zweite Endabschnitt 31 an einem ebenfalls nicht in der Figur dargestellten Zuglage an dem Bremshebel 41 angeordnet. Bei einem Betätigen der Bremstaste 18 werden bei der Rollleine 38 also beide Endabschnitte 30, 31 zu einem festeren Umschlingen des Umfangsabschnittes der Leinenrolle 13 bei einem Niederdrücken der Bremstaste 18 angetrieben.

Der Figur ist außerdem der Umfangsabschnitt 42 der Leinenrolle 13 zu entnehmen. Zu einer Verbesserung des Reibschlusses hat der Umfangsabschnitt 42 einen Reibbelag 43. Bei dem gezeigten Ausführungsbeispiel ist der Reibbelag 43 aus Polyurethan ausgebildet und in einem Zwei-Komponenten-Spritzgußverfahren zusammen mit der Leinenrolle 13 hergestellt.

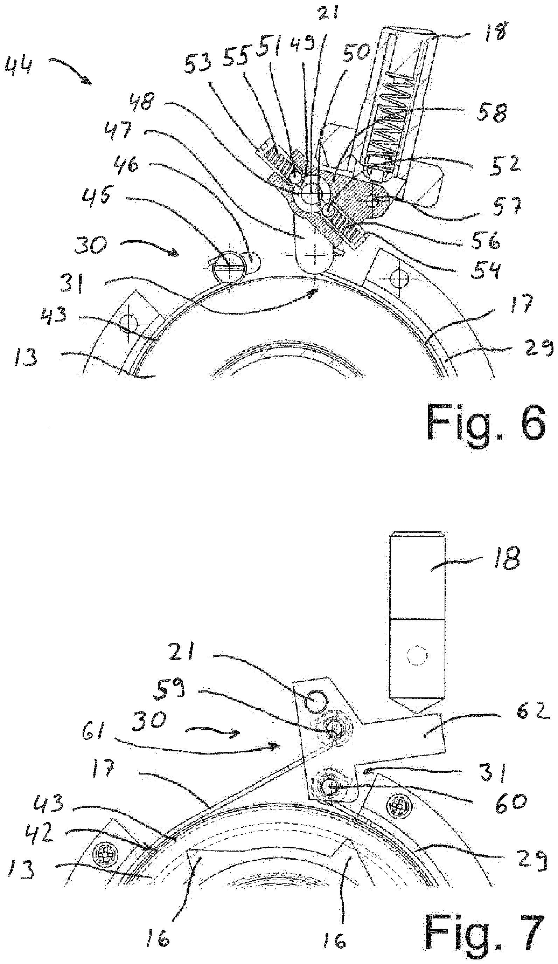

Fig. 6 zeigt eine schematische Darstellung der wesentlichen Elemente der Blockiermittel einer anderen Ausführungsform mit einer anderen Ausgestaltung einer Kupplung 44. Im Wesentlichen entspricht diese Ausführungsform von ihrer Funktionsweise den Rolleinen 10 und 38. Gleiche Elemente tragen die gleichen Bezugszeichen.

Wie sich der Figur entnehmen lässt, ist der erste Endabschnitt 30 an einer Schraube 45 befestigt, die in einem Langloch 46 geführt ist. Auf diese Weise ergibt sich die Funktion ähnlich dem Festlager 28, wobei beim Entspannen des Bremsbandes die Schraube 45 in dem Langloch 46 in der Figur nach rechts gleiten kann. Auf diese Weise wird ein größerer Freiraum zwischen dem Bremsband 17 und dem Umfangsabschnitt 42 im nicht betätigten Zustand der Bremstaste 18 gewährleistet.

Der zweite Endabschnitt 31 ist bei dem gezeigten Ausführungsbeispiel an einem nicht in der Figur wiedergegebenen Zuglager angeordnet, das am von der Achse 21 abgewandten Ende eines Bremshebels 47 angeordnet ist. Der Bremshebel 47 hat die Achse 21 umgebend an seinem von dem Zuglager abgewandten Ende einen Zylinder 48.

Bei der Kupplung 44 handelt es sich um eine Kugelkopfkupplung 44. Die Kugelkopfkupplung hat Bohrungen 49, 50 an voneinander abgewandten Umfangsseiten des Zylinders 48. Den Bohrungen 49, 50 jeweils zugeordnet sind Kugeln 51, 52 vorgesehen, die in Buchsen 53, 54 angeordnet sind. Die Kugeln 51, 52 werden in den Buchsen 53, 54 mittels Federn 55, 56 auf die Bohrungen 49, 50 jeweils vorgespannt.

Die Bremstaste 18 ist mittels eines Bolzens 57 mit einem Halter 58 schwenkbar verbunden. Der Halter 58 wiederum ist um die Achse 21 schwenkbar und dient zur Befestigung der Hülsen 53, 54.

Bei einer Betätigung der Bremstaste 18 wird der Halter 58 in der Figur im Uhrzeigersinn geschenkt. Durch die mittels der Federn 55, 56 in die Bohrungen 49, 50 vorgespannten Kugeln 51, 52 wird ein Drehmoment auf den Zylinder 48 übertragen. Dadurch wird der Bremshebel 47 ebenfalls in der Figur im Uhrzeigersinn geschwenkt und zieht über das Zuglager den zweiten Endabschnitt 31 des Bremsbandes 17 in der Figur nach links. Die Schraube 45 kann dabei soweit in der Figur nach links ausweichen, wie dies durch das Langloch 46 möglich ist. Schlägt die Schraube 45 am in der Figur linken Rand des Langloches 46 an, wirkt die Schraube 45 weiterhin als Festlager für den ersten Endabschnitt 30. Das Bremsband schnürt sich dann auf dem Umfangsabschnitt 42 der Leinenrolle 13 fest und bewirkt ein Abbremsen der Drehbewegung.

Bei einem Überschreiten der durch die Kugelkopfkupplung 44 bestimmten Kuppelkraft, im vorliegenden Ausführungsbeispiel sind dies 25 N, gleiten die Kugeln 51, 52 aus den Bohrungen 49, 50 gegen die Federkraft der Federn 55, 56 zurück und rollen danach auf dem Zylinder 48 ab. Eine weitere Kraftübertragung von der Bremstaste 18 auf den Bremshebel 47 und damit den zweiten Endabschnitt 31 ist dann nicht mehr möglich und es folgt ein Arretieren auf die vorstehend bereits beschrieben Weise.

Fig. 7 zeigt eine schematische Darstellung eines anderen Wirkprinzips einer Bremse für eine Rollleine mit den Erfindungsmerkmalen. Das dargestellte Wirkprinzip entspricht im Wesentlichen dem der Rollleinen 10, 38. Gleiche Elemente tragen die gleichen Bezugszeichen. Anders als bei der Rollleine 38 hat das gezeigte Ausführungsbeispiel ein erstes Zuglage 59 für den ersten Endabschnitt 30 und ein zweites Zuglage 60 für den zweiten Endabschnitt 31. Anders als bei der Rollleine 38 sind der erste Zugabschnitt 59 und der zweite Zugabschnitt 60 an demselben Bremshebel 61 angeordnet, der gemeinsam mit einem Betätigungshebel 62 um die Achse 21 schwenkbar ist. Bei dem gezeigten Ausführungsbeispiel ist das erste Zuglage 59 unter einem kürzeren Abstand zu der Achse 21 an dem Bremshebel 61 angeordnet als das zweite Zuglage 60. Wenn sich in diesem Fall die Leinenrolle 13 durch den Zug eines geführten Tieres in der Figur gegen den Uhrzeigersinn dreht und die Bremstaste 18 in der Figur nach unten gedrückt wird, wird dadurch der Betätigungshebel 62 in der Figur im Uhrzeigersinn um die Achse 21 geschwenkt. Dadurch werden der Bremshebel 61 und die daran befindlichen Zuglager 59, 60 in der Figur ebenfalls im Uhrzeigersinn verschwenkt. Dabei gibt das erste Zuglager 59 den daran angeordneten ersten Endabschnitt 30 ein Stück weit frei, während das zweite Zuglager den daran angeordneten zweiten Endabschnitt 31 kräftiger anzieht. Der dabei zurück gelegte Weg des zweiten Zuglagers zum Strammziehen des Bremsbandes 17 ist größer als der zurück gelegte Weg des ersten Zuglagers 59, weil das zweite Zuglager 60 einen größeren radialen Abstand von der Achse 21 hat als das erste Zuglager 59. Auf diese Weise lässt sich durch eine entsprechende Abstimmung der radialen Abstände der Zuglager 59, 60 von der Achse 21 das gewünschte Maß an Selbsthemmung erzielen.

**Bezugszeichenliste:**

| | | | |
|---|---|---|---|
| 10 | Rollleine | 37 | Vorsprung |
| 11 | Gehäuse | 38 | Rollleine |
| 12 | Leine | 39 | Betätigungshebel |
| 13 | Leinenrolle | 40 | Bremshebel |
| 14 | Griff | 41 | Bremshebel |
| 15 | Achse | 42 | Umfangsabschnitt |
| 16 | Vorsprung | 43 | Reibbelag |
| 17 | Bremsband | 44 | Kugelkopfkupplung |
| 18 | Bremstaste | 45 | Schraube |
| 19 | Arretiertaste | 46 | Langloch |
| 20 | Rastabschnitt | 47 | Bremshebel |
| 21 | Achse | 48 | Zylinder |
| 22 | Betätigungshebel | 49 | Bohrung |
| 23 | Bremshebel | 50 | Bohrung |
| 24 | Achse | 51 | Kugel |
| 25 | Arm | 52 | Kugel |
| 26 | Vorsprung | 53 | Hülse |
| 27 | Arm | 54 | Hülse |
| 28 | Festlager | 55 | Feder |
| 29 | Rippe | 56 | Feder |
| 30 | erster Endabschnitt | 57 | Bolzen |
| 31 | zweiter Endabschnitt | 58 | Halter |
| 32 | Zuglager | 59 | Zuglager |
| 33 | Magnetkupplung | 60 | Zuglager |
| 34 | Magnet | 61 | Bremshebel |
| 35 | Eisenstück | 62 | Betätigungshebel |
| 36 | Arretierabschnitt | | |

## Patentansprüche

1. Rollleine zum Aufrollen und Abrollen einer Leine (12), insbesondere zum Führen eines Tieres, mit einer Leinenrolle (13), die drehbar an einem Träger (11) gelagert und mittels Rückstellmitteln in eine Aufrollposition rückstellbar ist, in der die Leine (12) auf die Leinenrolle (13) aufgewickelt ist, und mit Blockiermitteln zum Blockieren eines Abrollens der Leine (12) von der Leinenrolle (13), welche eine mit der Leinenrolle (13) reibschlüssige Bremse (17) haben, die als Bandbremse mit einem Bremsband ausgebildet ist, **dadurch gekennzeichnet, dass** die Blockiermittel zweistufig sind und als zweite Stufe Rastmittel (20) zum formschlüssigen Blockieren des Abrollens haben, die mit Vorsprüngen (16) im Bereich des Außenumfangs der Leinenrolle (13) zusammenwirken, und dass eine Bremstaste (18) zum Betätigen der Bremse und der zweiten Stufe vorgesehen ist.

2. Rollleine nach Anspruch 1, **dadurch gekennzeichnet, dass** die Bremse eine Bandbremse mit einem als langgestreckter Metallstreifen (17) ausgebildeten Bremsband ist, das insbesondere die Leinenrolle (13) in einem Umfangsabschnitt (42) umgibt, wobei besonders bevorzugt der Umfangsabschnitt (42) einen Reibbelag (43), insbesondere aus Polyurethan, aufweist, wobei der Reibbelag (43) vorzugsweise nach einem Zwei-Komponenten-Spritzgußverfahren hergestellt ist.

3. Rollleine nach Anspruch 2, **dadurch gekennzeichnet, dass** das Bremsband (17) einen ersten Endabschnitt (30) und einen von dem ersten Endabschnitt (30) abgewandten zweiten Endabschnitt (31) hat, wobei insbesondere mindestens der erste Endabschnitt (30) oder der zweite Endabschnitt (31) als Betätigungsabschnitt zum Ineingriffbringen des Bremsbandes (17) mit dem Reibbelag (43) an einem Zuglager (32, 59, 60) angeordnet ist, und wobei vorzugsweise der erste Endabschnitt (30) oder der zweite Endabschnitt (31) in seiner Längsbewegung durch einen Anschlag begrenzt, insbesondere ortsfest, an dem Träger angeordnet ist.

4. Rollleine nach einem der vorhergehenden Ansprüche, **dadurch gekennzeichnet, dass** die Bremstaste (18) mittels eines Hebelgetriebes mit dem Bremsband (17) in Wirkverbindung steht, wobei das Hebelgetriebe insbesondere einen um eine Achse schwenkbaren Bremshebel (23, 40, 41, 47, 61) aufweist.

5. Rollleine nach Anspruch 4, **dadurch gekennzeichnet, dass** der Bremshebel einen Doppelhebel (40, 41, 61) mit zwei vorzugsweise an voneinander abgewandten Seiten der Achse angeordneten Teilbremshebeln (40, 41) hat, die insbesondere die gleiche Hebellänge haben.

6. Rollleine nach Anspruch 5, **dadurch gekennzeichnet, dass** ein beim Bremsen auf Zug durch das Bremsband (17) belastetes Zuglager eine kleinere Hebellänge hat als ein beim Bremsen auf Druck durch das Bremsband (17) belastetes Zuglager.

7. Rollleine nach einem der vorhergehenden Ansprüche, **gekennzeichnet durch** eine Kupplung (33, 44) zum Auslösen der zweiten Stufe, insbesondere eine Rutschkupplung, eine Magnetkupplung (33), die vorzugsweise miteinander magnetisch gekuppelte Hebel (22, 27) hat, wobei insbesondere mindestens ein Hebel (22) Teil des Hebelgetriebes ist, oder eine Kugelkopfkupplung (44), die besonders bevorzugt eine Einsenkung (49, 50) und eine damit in Verbindung stehende Kugel (51, 52) hat, die insbesondere mittels einer Feder (55, 56) gegen die Einsenkung (49, 50) vorgespannt und gegen die Federkraft zum Lösen der Kupplung (44) bewegbar ist.

8. Rollleine nach einem der vorhergehenden Ansprüche, **gekennzeichnet durch** eine Arretiertaste (19) zum Arretieren der Bremstaste (18) in einer Bremsstellung, insbesondere in einer Blockierstellung, wobei zum Betätigen der Arretiertaste (19) vorzugsweise ein Schaltwiderstand überwunden werden muss, der besonders bevorzugt durch einen mit der Arretiertaste (19) wirkverbundenen, einen, insbesondere kugelkopfförmigen, Vorsprung (26) aufweisenden Hebel (25) bewirkt wird, der mit einem Trägervorsprung, vorzugsweise einer Trägerrippe, oder einer Trägereinsenkung zusammenwirkt.

## Claims

1. Retractable leash for coiling and uncoiling a leash (12), in particular for walking an animal, comprising a leash reel (13) which is rotatably mounted on a carrier (11) and can be reset by means of resetting means into a coiled position in which the leash (12) is wound up on the leash reel (13), and comprising blocking means for blocking the uncoiling of the leash (12) from the leash reel (13), which blocking means have a brake (17) which is frictionally engaged with the leash reel (13) and which is designed as a band brake having a braking band, **characterized in that** the blocking means are two-stage and have latching means (20) for positive blocking of the uncoiling as a second stage, which latching means interact with protrusions (16) in the region of the outer circumference of the leash reel (13), **and in that** a brake button (18) is provided for actuating the brake and the second stage.

2. Retractable leash according to Claim 1, **characterized in that** the brake is a band brake having a braking band which is embodied as an elongated metal strip (17) and which in particular encircles a section of circumference (42) of the leash reel (13), wherein the section of circumference (42) particularly preferably has a friction pad (43), in particular of polyurethane, wherein the friction pad (43) is preferably produced by a two-component injection-molding process.

3. Retractable leash according to Claim 2, **characterized in that** the braking band (17) has a first end section (30) and a second end section (31) facing away from the first end section (30), wherein in particular at least the first end section (30) or the second end section (31) is arranged on a pull bearing (32, 59, 60) as the actuating section for causing the braking band (17) to engage with the friction pad (43), and wherein preferably the first end section (30) or the second end section (31) is arranged, in particular fixedly in place, on the carrier such that its longitudinal movement is limited by a stop.

4. Retractable leash according to any of the preceding claims, **characterized in that** the brake button (18) is operatively connected to the braking band (17) by means of a lever mechanism, wherein the lever mechanism has, in particular, a brake lever (23, 40, 41, 47, 61) which can be pivoted about an axis.

5. Retractable leash according to Claim 4, **characterized in that** the brake lever has a double lever (40, 41, 61) with two partial brake levers (40, 41), which are preferably arranged on sides of the axis that face away from each other and which in particular have the same lever length.

6. Retractable leash according to Claim 5, **characterized in that** a pull bearing that is loaded by tension applied by the braking band (17) during braking has a smaller lever length than a pull bearing that is loaded by pressure applied by the braking band (17) during braking.

7. Retractable leash according to any of the preceding claims, **characterized by** a coupling (33, 44) for triggering the second stage, in particular a friction coupling, a magnetic coupling (33), which preferably has levers (22, 27) that are magnetically coupled to each other, wherein in particular at least one lever (22) is part of the lever mechanism, or a ball-and-socket coupling (44), which particularly preferably has a depression (49, 50) and a ball (51, 52) connected thereto, said ball being pressed against the depression (49, 50) in particular by means of a spring (55, 56) and movable against the spring force for releasing the coupling (44).

8. Retractable leash according to any of the preceding claims, **characterized by** a lock button (19) for locking the brake button (18) in a braked position, in particular in a blocking position, wherein, for actuating the lock button (19), it is preferably necessary to overcome a switch resistance which is particularly preferably brought about by a lever (25) which is operatively connected to the lock button (19) and has a protrusion (26), in particular in the shape of a ball, which lever interacts with a carrier protrusion, preferably a carrier rib, or a carrier depression.

## Revendications

1. Laisse enroulable pour enrouler et dérouler une laisse (12), en particulier pour guider un animal, comprenant un rouleau de laisse (13), agencé rotatif sur un support (11) et pouvant être ramené au moyen de moyens de retour dans une position enroulée, dans laquelle la laisse (12) est bobinée sur le rouleau de laisse (13) et comprenant des moyens de blocage destinés à bloquer un déroulement de la laisse (12) depuis le rouleau de laisse (13), qui présentent un frein (17) interagissant par friction avec le rouleau de laisse (13), qui est conçu comme un frein à bande comprenant une bande de freinage, **caractérisée en ce que** les moyens de blocage sont à deux niveaux et présentent comme second niveau des moyens d'encliquetage (20) pour le blocage du déroulement par complémentarité de forme, qui coopèrent avec des saillies (16) dans la région de la circonférence externe du rouleau de laisse (13) **et en ce qu'**un bouton de frein (18) est prévu pour actionner le frein et le second niveau.

2. Laisse enroulable selon la revendication 1, **caractérisée en ce que** le frein est un frein à bande comprenant une bande de freinage conçue comme une bande métallique allongée (17), qui entoure en particulier le rouleau de laisse (13) dans une section circonférentielle (42), de manière particulièrement préférée, la section circonférentielle (42) présentant une garniture de friction (43), en particulier en polyuréthane, la garniture de friction (43) étant fabriquée de préférence selon un procédé de moulage par injection à deux composants.

3. Laisse enroulable selon la revendication 2, **caractérisée en ce que** la bande de freinage (17) présente une première section d'extrémité (30) et une seconde section d'extrémité (31) opposée à la première section d'extrémité (30), en particulier au moins la première section d'extrémité (30) ou la seconde section d'extrémité (31) étant disposée sous forme de section d'actionnement pour la mise en prise de la bande de freinage (17) avec la garniture de friction (43) sur un palier de traction (32, 59, 60) et de préférence la première section d'extrémité (30) ou la seconde section d'extrémité (31) étant disposée sur le support de manière limitée dans son mouvement longitudinal par une butée, en particulier de manière stationnaire.

4. Laisse enroulable selon l'une quelconque des revendications précédentes, **caractérisée en ce que** le bouton de frein (18) est en liaison active avec la bande de freinage (17) au moyen d'un mécanisme à levier, le mécanisme à levier présentant en particulier un levier de freinage (23, 40, 41, 47, 61) pouvant pivoter autour d'un axe.

5. Laisse enroulable selon la revendication 4, **caractérisée en ce que** le levier de freinage présente un levier double (40, 41, 61) comprenant deux leviers de freinage partiels (40, 41) disposés de préférence sur des côtés opposés l'un à l'autre de l'axe, qui présentent en particulier la même longueur de levier.

6. Laisse enroulable selon la revendication 5, **caractérisée en ce qu'un** palier de traction sollicité en traction par la bande de freinage (17) lors du freinage présente une longueur de levier inférieure à un palier de traction sollicité en pression par la bande de freinage (17) lors du freinage.

7. Laisse enroulable selon l'une quelconque des revendications précédentes, **caractérisée par** un accouplement (33, 44) pour déclencher le second niveau, en particulier un accouplement à glissement, un accouplement magnétique (33), qui présente de préférence des leviers (22, 27) accouplés l'un à l'autre par voie magnétique, en particulier au moins un levier (22) formant une partie du mécanisme à levier, ou un accouplement à tête sphérique (44), qui présente, de manière particulièrement préférée, un renfoncement (49, 50) et une bille (51, 52) associée à celui-ci, qui est en particulier précontrainte au moyen d'un ressort (55, 56) contre le renfoncement (49, 50) et mobile contre la force de rappel pour libérer l'accouplement (44).

8. Laisse enroulable selon l'une quelconque des revendications précédentes, **caractérisée par** un bouton d'arrêt (19) pour arrêter le bouton de freinage (18) dans une position de freinage, en particulier dans une position de blocage, où, pour actionner le bouton d'arrêt (19), de préférence, une résistance de commutation doit être surmontée, qui est de manière particulièrement préférée provoquée par un levier (25) présentant une saillie (26), en particulier en forme de tête sphérique et en liaison active avec le bouton d'arrêt (19), qui coopère avec une saillie de support, de préférence une nervure de support ou un renfoncement de support.
